# EUROPEAN PATENT SPECIFICATION

(11) **EP 2 938 866 B1**
(45) Date of publication and mention of the grant of the patent: **11.04.2018**
(21) Application number: 12820865.9
(22) Date of filing: 27.12.2012
(51) Int. Cl.: F02C 1/05, F02N 19/00, F02N 19/04, F02N 19/10, F01P 3/04

(54) **PRE-HEATING SYSTEM FOR A POWER PLANT WITH AN INTERNAL COMBUSTION ENGINE**
VORWÄRMUNGSSYSTEM FÜR EIN KRAFTWERK MIT EINEM VERBRENNUNGSMOTOR
SYSTÈME DE PRÉCHAUFFAGE POUR UNE CENTRALE AVEC UN MOTEUR À COMBUSTION INTERNE

(43) Date of publication of application: 04.11.2015
(73) Proprietor: Wärtsilä Finland Oy, 65380 Vaasa (FI)
(72) Inventor: LINDE, Eirik, FI-65410 Vaasa (FI); BJÖRKLUND, Matias, FI-65100 Vaasa (FI); SMEDS, Anders, FI-65800 Replot (FI); ANDERSSON, Lars-Johan, FI-65920 Norra Vallgrund (FI); WESTERLUND, Andreas, FI-65100 Vaasa (FI)
(74) Representative: Berggren Oy, Helsinki & Oulu
(86) International application number: PCT/FI2012/051301
(87) International publication number: WO 2014/102441

(56) References cited:
- DE-A1-102005 047 354
- JP-A- S59 128 974
- US-A- 4 711 204
- US-A1- 2006 144 047

## Description

### TECHNICAL FIELD

The present invention relates to a pre-heating system in accordance with the preamble of claim 1. The invention also concerns a method and a power plant unit, as defined in the preamble of the other independent claims.

### BACKGROUND ART

At power plants which are used for power supply purposes especially as a peak load resource or as an emergency power plant the annual usage may be very low. This means that the power plant is maintained in stand-by state and ready to start within certain quite short time period, for example within 10 minutes. As the engine need to be pre-heated to a specific engine dependent temperature (for example 50 to 55 °C) before the st art-up, in these peak load and emergency plants the engines are maintained constantly in this pre-heated stand-by state.

With the pre-heating the main purpose is to ensure that those parts in the engine, which are functionally operating with each other and exposed to thermal load, are in a temperature which is near enough to a normal steady state temperature of the engine in operation. Thus the thermal load caused by the started combustion does not change the temperature of engine parts too much. Too high temperature change may for example cause closing of those operationally necessary clearances between engine parts, for example within bearings, between pistons and cylinders, etc.. In order to get the pre-heating temperature to have effect in correct places in the engine, the cooling system is used for this purpose. As the cooling system is designed to remove the excess heat from those same locations, it is very usable also the other way around - for pre-heating the critical components of the engine. Thus the cooling fluid is heated to the pre-heating temperature and circulated similarly or nearly similarly as it would circulated when the engine is operating. Electric heating of the cooling fluid is the most common way to perform this pre-heating. However, maintain of the pre-heat temperature in the engine consumes significant amount of energy in long run, especially if the temperature difference between an exterior or ambient temperature and pre-heating temperature is large.

JP59128974A shows a system for shortening the warm-up time and for reducing the electric power consumption by heating an combustion engine and its ancillary system with a heat pump.

US2006/144047A1 shows a heating system for automotive vehicle.

### DISCLOSURE OF THE INVENTION

The objective of the present invention is to provide an effective way to maintain the pre-heating of the engine.

The pre-heating system of present invention is a pre-heating system for a power plant comprising an internal combustion engine and a cooling system for removal of excess heat from the engine when in operation state, the cooling system comprises a cooling fluid circulation arranged within the engine, a radiator for heat exchange of the engine, an outlet fluid channel to lead the cooling fluid from the engine to the radiator, an inlet fluid channel to return the cooling fluid back from the radiator to the engine and a fluid pump to circulate the cooling fluid, the cooling system is provided with said pre-heating system for heating the cooling fluid, when the engine is in standby state,
the pre-heating system is provided with a heat pump system arranged for utilizing thermal energy of air to be passed via/through the radiator, the heat pump system is arranged to convert thermal energy of lower temperature air to thermal energy of higher temperature cooling fluid,
the heat pump system comprises also a heat pump unit, a low temperature primary circuit and a high temperature secondary circuit wherein a heat transfer medium is arranged to be compressed and expanded between the primary and the secondary circuits,
the pre-heating system is provided with a heat exchanger of the heat pump system configured to transfer heat to the engine.

The power plant unit of present invention is a power plant unit comprising an internal combustion engine and a cooling system for removal of excess heat from the engine when in operation state, the cooling system comprises a cooling fluid circulation arranged within the engine, a radiator for heat exchange of the engine, an outlet fluid channel to lead the cooling fluid from the engine to the radiator, an inlet fluid channel to return the cooling fluid back from the radiator to the engine and a fluid pump to circulate the cooling fluid, the cooling system is provided with a pre-heating system for heating the cooling fluid, when the engine is in standby state,
the pre-heating system is provided with a heat pump system arranged for utilizing thermal energy of air to be passed via/through the radiator, the heat pump system is arranged to convert thermal energy of lower temperature air to thermal energy of higher temperature cooling fluid,
the heat pump system comprises also a heat pump unit, a low temperature primary circuit and a high temperature secondary circuit wherein a heat transfer medium is arranged to be compressed and expanded between the primary and the secondary circuits,
the pre-heating system is provided with a heat exchanger of the heat pump system configured to transfer heat to the engine.

The method of present invention is a method for power plant unit pre-heating;
- a cooling fluid circulation is arranged within a cooling system comprising an internal combustion engine, a radiator for heat exchange of the engine, an outlet fluid channel to lead the cooling fluid from the engine to the radiator, an inlet fluid channel to return the cooling fluid back from the radiator to the engine and wherein a fluid pump is operated to circulate the cooling fluid,
- the cooling system is provided with heat from a pre-heating system for heating the cooling fluid, when the engine is in standby state,
the pre-heating system is provided with a heat exchanger of a heat pump system which heat pump system utilize thermal energy of air to passing via/through the radiator, the heat pump system is arranged to convert thermal energy of lower temperature air to thermal energy of higher temperature cooling fluid,
the heat pump system comprises also a heat pump unit, a low temperature primary circuit and a high temperature secondary circuit wherein a heat transfer medium is arranged to be compressed and expanded between the primary and the secondary circuits.

A heat pump system utilizing thermal energy of air to be passed via/through the radiator, wherein the heat pump system is arranged to convert thermal energy of lower temperature air to thermal energy of higher temperature cooling fluid can be used in a very cost effective way for remarkably lowering the engine pre-heating energy consumption. This solution is especially attractive for standby, peaking and emergency power plants running for only short intervals during the year. The term via/through is used here to describe the possible differences in actual radiator construction, the air may flow through the radiator or it may flow via the radiator.

Another advantage is to have a system, which has improved efficiency in terms of energy consumption during the maintenance of the pre-heated standby state of the engine. The heat pump system may in certain conditions be able to provide heat energy about four times the amount it consumes electric energy. In situation of very cold ambient air this efficiency factor degrades to or close to 1:1. However, in the power plant design phase it may be calculated quite easily if this system is economically viable for the given climate of that particular location. Still another advantage is that it makes possible to provide a system, which is capable of maintain the pre-heated stand-by state in various climates in an effective way.

In this description the following definitions has been used:

The term heat exchanger is an apparatus which exchanges heat between two medias, for example from one circuit of cooling fluid to another circuit of cooling fluid. In this description the term a heat exchanger comprises two closed circuits, a primary circuit which has a function of heat emission in the heat exchanger and a secondary circuit which has a function of heat reception in the heat exchanger. The term radiator means in this description a specific type of heat exchanging device comprising one closed circuit for the cooling fluid of the engine and the other heat transfer medium is ambient air (open circuit). The radiator has a primary function of cooling of the engine when in operation. There may be one or several radiators for one or group of engines and one radiator may comprise one or multiple radiator units.

According an embodiment there is a pre-heating system wherein the primary circuit of the heat pump system is arranged in thermal connection with said cooling fluid to be flown through the radiator. There are several ways to arrange this thermal connection and the following embodiments disclose some of those in more detail. One possibility is that the thermal connection is arranged by a heat exchanger between said primary circuit of the heat pump system and said cooling fluid. In this embodiment the cooling fluid circulating in the radiator is also conducted through said heat exchanger, as its primary circuit and the refrigerant of the heat pump system is arranged to be circulated in the secondary circuit of said heat exchanger. Thus the primary circuit of the heat pump system is the secondary circuit of said heat exchanger.

Another embodiment is a pre-heating system, wherein the primary circuit of the heat pump system is arranged to comprise a radiator type heat exchanger separate to cooling fluid circuit and which is located with the radiator. In this embodiment a housing or frame of the radiator is configured to comprise also another radiator type heat exchanging device which includes the primary circuit of the heat pump system. This embodiment gives possibility to have large surface area for heat emission.

According to an embodiment, the pre-heating system is configured to comprise an intermediate fluid channel configuring the cooling system in at least two circuits, when the engine is in standby state,
- a radiator circuit wherein a part of the cooling fluid is configured to be circulated between the radiator and a heat exchanger of the primary circuit of the heat pump system and
- a pre-heating circuit wherein a part of the cooling fluid is configured to be circulated between the engine and a heat exchanger in the pre-heating circuit. By this arrangement the cooling fluids can be separated in different sections having quite different temperatures. This enables high efficiency in pre-heating energy production and the temperature change in different sections of circuits can be kept low.

Still according to an embodiment of the pre-heating system the heat exchanger in the pre-heating circuit is arranged such that the heat exchangers secondary circuit is the pre-heating circuit and the heat exchangers primary circuit is a transfer circuit arranged as a secondary circuit of a heat exchanger in the secondary circuit of the heat pump system. Thus the circuits are arranged in several consecutive circuits and then the temperature in each circuit may be gradually changed. This embodiment also enables use of one heat pump system for one or several power plant units, wherein one power plant unit comprises at least one engine but may also comprise several engines.

According to one aspect of the invention it is configured a power plant unit comprising an internal combustion engine and a cooling system for removal of excess heat from the engine when in operation state, the cooling system comprises a cooling fluid circulation arranged within the engine, a radiator for heat exchange of the engine, an outlet fluid channel to lead the cooling fluid from the engine to the radiator, an inlet fluid channel to return the cooling fluid back from the radiator to the engine and a fluid pump to circulate the cooling fluid,
the cooling system is provided with a pre-heating system for heating the cooling fluid, when the engine is in standby state,
the pre-heating system is provided with a heat pump system arranged for utilizing thermal energy of air to be passed via/through the radiator, the heat pump system is arranged to convert thermal energy of lower temperature air to thermal energy of higher temperature cooling fluid,
the heat pump system comprises also a heat pump unit, a low temperature primary circuit and a high temperature secondary circuit wherein a heat transfer medium is arranged to be compressed and expanded between the primary and the secondary circuits,
the pre-heating system is provided with a heat exchanger of the heat pump system configured to transfer heat to the engine. This power plant unit may be configured to utilize all the embodiments already explained in connection with the pre-heating system.

Further it may be arranged so that there is a power plant comprising at least one power plant unit as explained above, wherein one power plant unit comprises at least one engine but may also comprise several engines. The power plant unit may comprise also two or more engines and wherein the radiator or radiators of one engine is used with heat pump system. The power plant unit may comprise one heat pump system, which utilizes one or more radiators and supplies power to pre-heating circuits of one or more engines. These embodiments enable the selection of suitable amount of pre-heating capacity to any given situation and furthermore it enables to take in to account the effectivity of the pre-heating system, power plant and power plant unit in consideration.

According to another aspect of the invention is a method for power plant unit pre-heating wherein;
- a cooling fluid circulation is arranged within a cooling system comprising an internal combustion engine, a radiator for heat exchange of the engine, an outlet fluid channel to lead the cooling fluid from the engine to the radiator, an inlet fluid channel to return the cooling fluid back from the radiator to the engine and wherein a fluid pump is operated to circulate the cooling fluid,
- the cooling system is provided with heat from a pre-heating system for heating the cooling fluid, when the engine is in standby state,
the pre-heating system is provided with a heat pump system utilizing thermal energy of air to be passed via/through the radiator, the heat pump system converts thermal energy of lower temperature air to thermal energy of higher temperature cooling fluid,
the heat pump system comprises also a heat pump unit, a low temperature primary circuit and a high temperature secondary circuit wherein a heat transfer medium is compressed and expanded between the primary and the secondary circuits,
the pre-heating system is provided with a heat exchanger of the heat pump system transfering heat to the engine.

The method can be further applied so that the pre-heating system is selectively controlled in respect to ambient temperature of radiator. Since the actual efficiency of the heat pump system depends on outside air temperature, it is an advantage of the method that the use of those systems is done selectively. For example, according to one embodiment of the method, the heat pump unit is selected out of operation in ambient temperatures below predetermined limit or during other adverse weather conditions such as in severe ice forming weather. In ice forming conditions the radiator may well be able to take energy from the air, but the formation of ice in the radiator may have other consequences, which are not wanted. Thus the possibility to selectively control the system and its parts or sub parts is an advantage in use.

### BRIEF DESCRIPTION OF DRAWINGS

In the following some aspects of the invention are disclosed in more detail in reference to enclosed drawing.

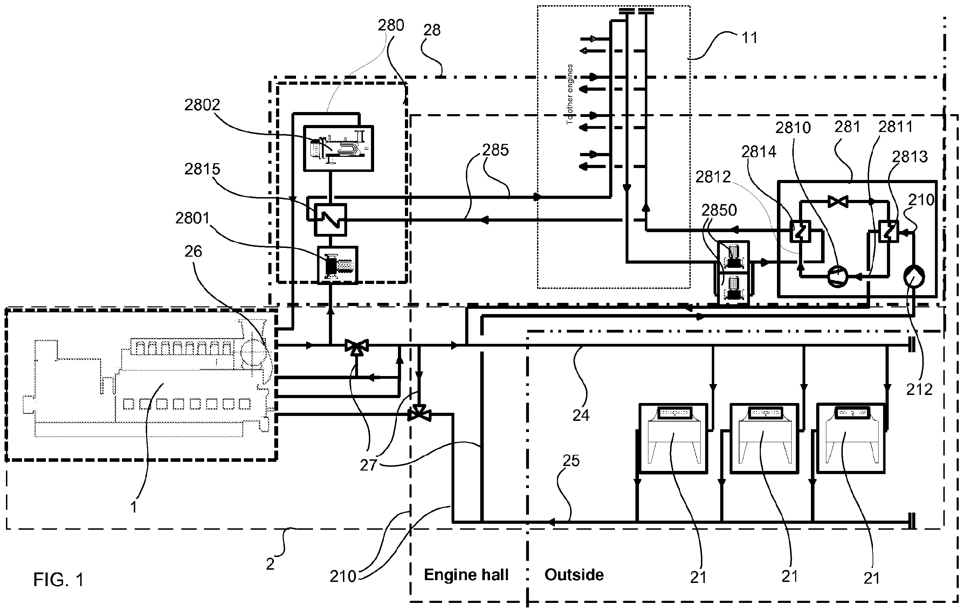

Fig. 1 presents a schematic drawing of a power plant unit.

In Fig. it is presented a power plant unit comprising an internal combustion engine 1 and a cooling system 2 for removal of excess heat from the engine 1 when in operation state, the cooling system 2 comprises a cooling fluid circulation (in the Fig. 1 most of the continuous lines represent fluid channels where the cooling fluid is arranged to be flown, the arrow head represents the direction of the flow) arranged within the engine, a radiator (or radiators) 21 for heat exchange of the engine 1 (radiators 21 are located outside an engine hall), an outlet fluid channel 24 to lead the cooling fluid from the engine to the radiator, an inlet fluid channel 25 to return the cooling fluid back from the radiator 21 to the engine 1 and a fluid pump 26 to circulate the cooling fluid,
the cooling system 2 is provided with a pre-heating system 28 for heating the cooling fluid, when the engine 1 is in standby state,
the pre-heating system 28 is provided with a heat pump system 281 arranged for utilizing thermal energy of air to be passed via/through the radiator 21, the heat pump system 281 is arranged to convert thermal energy of lower temperature air to thermal energy of higher temperature cooling fluid,
the heat pump system 281 comprises also a heat pump unit 2810, a low temperature primary circuit 2811and a high temperature secondary circuit 2812 wherein a heat transfer medium is arranged to be compressed and expanded between the primary 2811 and the secondary circuits 2812,
the pre-heating system 28 is provided with a heat exchanger 2815 of the heat pump system 281 configured to transfer heat to the engine 1.

In the pre-heating system 28 the primary circuit 2811 of the heat pump system 281 is arranged in thermal connection with said cooling fluid to be flown through the radiator 21. The thermal connection is arranged in the embodiment of Fig. 1 by a heat exchanger 2813 between said primary circuit 2811 of the heat pump system 281 and said cooling fluid. Thus a part of the cooling fluid is arranged to be circulated between the radiator 21 or radiators 21 and the heat exchanger 2813. A pump 212 is provided for circulation of the cooling fluid between said radiator 21 and heat exchanger 2813.

Another embodiment (not shown in Fig. 1) is that the primary circuit of 2811 the heat pump system is arranged to comprise a radiator type heat exchanger separate to cooling fluid circuit and which is located with the radiator 21.

The pre-heating system 28 or the power plant unit may also be configured such that it comprises an intermediate fluid channel 27 (or multiple intermediate channels 27) configuring the cooling system 2 in at least two circuits, when the engine is in standby state,
- a radiator circuit 210 wherein a part of the cooling fluid is configured to be circulated between the radiator 21 and a heat exchanger 2813 of the primary circuit 2811 of the heat pump system 281 and
- a pre-heating circuit 280 wherein a part of the cooling fluid is configured to be circulated between the engine 1 and a heat exchanger 2815 in the pre-heating circuit 280.

According to the embodiment of Fig. 1, in the pre-heating system 28 the heat exchanger 2815 in the pre-heating circuit 280 is arranged such that the heat exchangers secondary circuit is the pre-heating circuit 280 and the heat exchangers primary circuit is a transfer circuit 285 arranged as a secondary circuit of a heat exchanger 2814 in the secondary circuit 2812 of the heat pump system 281. The transfer circuit comprise pump 2850 for circulating the fluid (most likely part of the cooling fluid) in the transfer circuit 285. The pre-heating circuit also comprises a pump 2801 for circulating the cooling fluid when the engine is in stand by state, thus the pump 2801 is independent to rotation of the engine 1. The pre-heating circuit also may comprise a heat element 2802 for heating the cooling fluid, for example in preparation for exceptionally cold weather circumstances when the heat pump system capacity may be inadequate.

A power plant comprise at least one power plant unit, wherein one power plant unit comprises at least one engine 1 but power plant unit may also comprise several engines 1. The power plant unit may comprise two or more engines 1 and wherein the radiator 21 or radiators 21 of one engine 1 can be used with heat pump system(s) 281. Also the power plant unit may comprise one heat pump system 281, which utilizes one or more radiators 21 and supplies power to pre-heating circuits 280 of one or more engines. This multiple use of preheating systems 28 and heat pump system 281 is illustrated with inlets/outlets 11 to other engines 1 or power plant units.

As evident to those skilled in the art, the invention and its embodiments are not limited to the above-described embodiment examples. Expressions representing the existence of characteristics, such as "the circuit comprises a pump", are non-restrictive such that the description of characteristics does not exclude or prerequisite the existence of such other characteristics which are not presented in the independent or dependent claims.

### Reference signs in figures:

- 1: engine
- 2: cooling system
- 21: radiator
- 210: radiator circuit
- 212: pump
- 24: outlet fluid channel
- 25: inlet fluid channel
- 26: fluid pump
- 27: intermediate fluid channel
- 28: pre-heating system
- 280: pre-heating circuit
- 281: heat pump system
- 2810: heat pump unit
- 2811: (low temperature) primary circuit
- 2812: (high temperature) secondary circuit
- 2813: heat exchanger (of primary circuit)
- 2814: heat exchanger (of secondary circuit)
- 2815: heat exchanger
- 285: transfer circuit
- 2850: pump

## Claims

1. A pre-heating system (2) of a power plant comprising an internal combustion engine (1) and a cooling system (2) for removal of excess heat from the engine (1) when in operation state, the cooling system (2) comprises a cooling fluid circulation arranged within the engine (1), a radiator (21) for heat exchange of the engine (1), an outlet fluid channel (24) to lead the cooling fluid from the engine (1) to the radiator (21), an inlet fluid channel (25) to return the cooling fluid back from the radiator (21) to the engine (1) and a fluid pump (26) to circulate the cooling fluid,
the cooling system (2) is provided with said pre-heating system (28) for heating the cooling fluid, when the engine (1) is in the standby state,
the pre-heating system (28) is provided with a heat pump system (281) arranged for utilizing thermal energy of air to be passed via/through the radiator (21), the heat pump system (281) is arranged to convert thermal energy of lower temperature air to thermal energy of higher temperature cooling fluid,
- the heat pump system (281) comprises also a heat pump unit (2810), a low temperature primary circuit (2811) arranged in thermal connection with said cooling fluid to be flown through the radiator (21) and a high temperature secondary circuit (2812) wherein a heat transfer medium is arranged to be compressed and expanded between the primary (2811) and the secondary (2812) circuits,
- the pre-heating system (28) is provided with a heat exchanger (2815) of the heat pump system (281) configured to transfer heat to the engine (1).

2. The pre-heating system (28) of claim 1, wherein the thermal connection is arranged by a heat exchanger (2813) between said primary circuit (2811) of the heat pump system (281) and said cooling fluid.

3. The pre-heating system (28) of claim 1, wherein the primary circuit (2811) of the heat pump system (281) is arranged to comprise a radiator type heat exchanger separate to cooling fluid circuit and which is located with the radiator (21).

4. The pre-heating system (281) of claim 1, comprising an intermediate fluid channel (27) configuring the cooling system (2) in at least two circuits, when the engine (1) is in standby state,
- a radiator circuit (210) wherein a part of the cooling fluid is configured to be circulated between the radiator (21) and a heat exchanger (2813) of the primary circuit (2811) of the heat pump system (281) and
- a pre-heating circuit (280) wherein a part of the cooling fluid is configured to be circulated between the engine (1) and a heat exchanger (2815) in the pre-heating circuit (280).

5. The pre-heating system (28) of claim 4, wherein the heat exchanger (2815) in the pre-heating circuit (280) is arranged such that the heat exchangers (2815) secondary circuit is the pre-heating circuit (280) and the heat exchangers (2815) primary circuit is a transfer circuit (285) arranged as a secondary circuit of a heat exchanger (2814) in the secondary circuit (2812) of the heat pump system (281).

6. A power plant unit comprising an internal combustion engine (1) and a cooling system (2) for removal of excess heat from the engine (1) when in operation state, the cooling system (2) comprises a cooling fluid circulation arranged within the engine (1), a radiator (21) for heat exchange of the engine (21), an outlet fluid channel (24) to lead the cooling fluid from the engine (1) to the radiator (21), an inlet fluid channel (25) to return the cooling fluid back from the radiator (21) to the engine (1) and a fluid pump (26) to circulate the cooling fluid,
the cooling system (2) is provided with a pre-heating system (28) for heating the cooling fluid, when the engine (1) is in standby state,
the pre-heating system (28) is provided with a heat pump system (281) arranged for utilizing thermal energy of air to be passed via/through the radiator (21), the heat pump system (281) is arranged to convert thermal energy of lower temperature air to thermal energy of higher temperature cooling fluid,
the heat pump system (281) comprises also a heat pump unit (2810), a low temperature primary circuit (2811) arranged in thermal connection with said cooling fluid to be flown through the radiator (21) and a high temperature secondary circuit (2812) wherein a heat transfer medium is arranged to be compressed and expanded between the primary (2811) and the secondary (2812) circuits,
the pre-heating system (281) is provided with a heat exchanger (2815) of the heat pump system (281) configured to transfer heat to the engine (1).

7. The power plant unit of claim 6, wherein the thermal connection is arranged by a heat exchanger (2813) between said primary circuit (2811) and said cooling fluid.

8. The power plant unit of claim 6, wherein the primary circuit (2811) of the heat pump system (281) is arranged to comprise a radiator type heat exchanger separate to cooling fluid circuit, which is located within the radiator (21).

9. The power plant unit of claim 6, comprising an intermediate fluid channel (27) configuring the cooling system in at least two circuits, when the engine (1) is in standby state,
- a radiator circuit (210) wherein a part of the cooling fluid is configured to be circulated between the radiator (21) and a heat exchanger (2813) of the primary circuit (2811) of the heat pump system (281) and
- a pre-heating circuit (280) wherein a part of the cooling fluid is configured to be circulated between the engine (1) and a heat exchanger (2815) in the pre-heating circuit (280).

10. The power plant unit of claim 9, wherein the heat exchanger in the pre-heating circuit is arranged such that the heat exchangers secondary circuit is the pre-heating circuit and the heat exchangers primary circuit is a transfer circuit arranged as a secondary circuit of a heat exchanger in the secondary circuit of the heat pump system.

11. A power plant comprising at least one power plant unit according to claim 6, wherein one power plant unit comprises at least one engine (1) but may also comprise several engines (1).

12. The power plant unit of claim 6, comprising two or more engines (1) and wherein the radiator (21) or radiators (21) of one engine (1) is used with heat pump system (281).

13. The power plant unit of claim 6 comprising one heat pump system (281), which utilizes one or more radiators (21) and supplies power to pre-heating circuits (280) of one or more engines (1).

14. A method for power plant unit pre-heating;
- a cooling fluid circulation is arranged within a cooling system (2) comprising an internal combustion engine (1), a radiator (21) for heat exchange of the engine, an outlet fluid channel (24) to lead the cooling fluid from the engine (1) to the radiator (21), an inlet fluid channel (25) to return the cooling fluid back from the radiator (21) to the engine (1) and wherein a fluid pump (26) is operated to circulate the cooling fluid,
- the cooling system (2) is provided with heat from a pre-heating system (28) for heating the cooling fluid, when the engine (1) is in standby state,
the pre-heating system (28) is provided with a heat exchanger (2815) of a heat pump system (281) which heat pump system (281) utilize thermal energy of air to passing via/through the radiator (21), the heat pump system (281) is arranged to convert thermal energy of lower temperature air to thermal energy of higher temperature cooling fluid,
the heat pump system (281) comprises also a heat pump unit (2810), a low temperature primary circuit (2811) arranged in thermal connection with said cooling fluid to be flown through the radiator (21) and a high temperature secondary circuit (2812) wherein a heat transfer medium is arranged to be compressed and expanded between the primary (2811) and the secondary (2812) circuits.

15. The method of claim 14 wherein the pre-heating system (281) is selectively controlled in respect to ambient temperature of radiator (21).

16. The method of claim 14 wherein the heat pump unit (2810) is selected out of operation in ambient temperatures below predetermined limit or during other adverse weather conditions such as in severe ice forming weather.

## Patentansprüche

1. Vorwärmsystem (2) eines Kraftwerks, umfassend einen Verbrennungsmotor (1) und ein Kühlsystem (2) zum Entfernen überschüssiger Wärme von dem Motor (1), wenn er sich im Betriebszustand befindet, wobei das Kühlsystem (2) eine Kühlmittelzirkulation, die innerhalb des Motors (1) angeordnet ist, einen Radiator (21) zum Wärmetausch des Motors (1), einen Auslassfluidkanal (24) zum Leiten des Kühlmittels von dem Motor (1) zu dem Radiator (21), einen Einlassfluidkanal (25) zum Rückführen des Kühlmittels von dem Radiator (21) zurück zu dem Motor (1) und eine Fluidpumpe (26) zum Zirkulieren des Kühlmittels umfasst,
wobei das Kühlsystem (2) mit dem Vorwärmsystem (28) zum Erwärmen des Kühlmittels, wenn der Motor (1) sich in dem Bereitschaftszustand befindet, bereitgestellt wird,
das Vorwärmsystem (28) mit einem Wärmepumpensystem (281) bereitgestellt wird, das zum Nutzen thermischer Energie von Luft, die über/durch den Radiator (21) passiert, angeordnet ist, das Wärmepumpensystem (281) zum Wandeln der thermischen Energie von Luft mit einer niedrigeren Temperatur zu thermischer Energie des Kühlmittels mit höherer Temperatur angeordnet ist,
- das Wärmepumpensystem (281) auch eine Wärmepumpeneinheit (2810), einen primären Kreislauf mit Niedrigtemperatur (2811), der in thermischer Verbindung mit dem Kühlmittel, das durch den Radiator (21) zu fließen ist, angeordnet ist, und einen sekundären Kreislauf mit hoher Temperatur (2812), umfasst, wobei ein Wärmetransfermedium angeordnet ist, zwischen dem primären (2811) und dem sekundären (2812) Kreislauf komprimiert und expandiert zu werden,
- das Vorwärmsystem (28) mit einem Wärmetauscher (2815) des Wärmepumpensystems (281) bereitgestellt wird und konfiguriert ist, Wärme an den Motor (1) zu übertragen.

2. Vorwärmsystem (28) nach Anspruch 1, wobei die thermische Verbindung von einem Wärmetauscher (2813) zwischen dem primären Kreislauf (2811) des Wärmepumpensystems (281) und dem Kühlmittel angeordnet ist.

3. Vorwärmsystem (28) nach Anspruch 1, wobei der primäre Kreislauf (2811) des Wärmepumpensystems (281) angeordnet ist, einen radiatorartigen Wärmetauscher zu umfassen, der von dem Kühlmittelkreislauf getrennt und mit dem Radiator (21) angeordnet ist.

4. Vorwärmsystem (281) nach Anspruch 1, umfassend einen Zwischenfluidkanal (27), der das Kühlsystem (2) in mindestens zwei Kreisläufe konfiguriert, wenn der Motor (1) sich im Bereitschaftszustand befindet,
- einen Radiatorkreislauf (210), wobei ein Teil des Kühlmittels konfiguriert ist, zwischen dem Radiator (21) und einem Wärmetauscher (2813) des primären Kreislaufes (2811) des Wärmepumpensystems (281) zirkuliert zu werden, und
- einen Vorwärmkreislauf (280), wobei ein Teil des Kühlmittels konfiguriert ist, zwischen dem Motor (1) und einem Wärmetauscher (2815) in dem Vorwärmkreislauf (280) zirkuliert zu werden.

5. Vorwärmsystem (28) nach Anspruch 4, wobei der Wärmetauscher (2815) in dem Vorwärmkreislauf (280) derart angeordnet ist, dass der sekundäre Kreislauf des Wärmetauschers (2815) der Vorwärmkreislauf (280) ist und der primäre Kreislauf des Wärmetauschers (2815) ein Transferkreislauf (285) ist, der als ein sekundärer Kreislauf eines Wärmetauschers (2814) in dem sekundären Kreislauf (2812) des Wärmepumpensystems (281) angeordnet ist.

6. Kraftwerkeinheit, umfassend einen Verbrennungsmotor (1) und ein Kühlsystem (2) zum Entfernen überschüssiger Wärme von dem Motor (1), wenn er sich im Betriebszustand befindet, wobei das Kühlsystem (2) eine Kühlmittelzirkulation, die innerhalb des Motors (1) angeordnet ist, einen Radiator (21) zum Wärmetausch des Motors (21), einen Auslassfluidkanal (24) zum Leiten des Kühlmittels von dem Motor (1) zu dem Radiator (21), einen Einlassfluidkanal (25) zum Rückführen des Kühlmittels von dem Radiator (21) zurück zu dem Motor (1) und eine Fluidpumpe (26) zum Zirkulieren des Kühlmittels umfasst,
wobei das Kühlsystem (2) mit einem Vorwärmsystem (28) zum Erwärmen des Kühlmittels, wenn der Motor (1) sich im Bereitschaftszustand befindet, bereitgestellt wird,
das Vorwärmsystem (28) mit einem Wärmepumpensystem (281) bereitgestellt wird, das zum Nutzen thermischer Energie der Luft, die über/durch den Radiator (21) passiert, angeordnet ist, das Wärmepumpensystem (281) zum Wandeln thermischer Energie von Luft mit einer niedrigeren Temperatur zu thermischer Energie des Kühlmittels mit höherer Temperatur angeordnet ist,
das Wärmepumpensystem (281) auch eine Wärmepumpeneinheit (2810), einen primären Kreislauf mit Niedrigtemperatur (2811), der in thermischer Verbindung mit dem Kühlmittel, das durch den Radiator (21) zu fließen ist, angeordnet ist, und einen sekundären Kreislauf mit hoher Temperatur (2812), umfasst, wobei ein Wärmetransfermedium angeordnet ist, zwischen dem primären (2811) und dem sekundären (2812) Kreislauf komprimiert und expandiert zu werden,
das Vorwärmsystem (281) mit einem Wärmetauscher (2815) des Wärmepumpensystems (281) bereitgestellt wird und konfiguriert ist, Wärme an den Motor (1) zu übertragen.

7. Kraftwerkeinheit nach Anspruch 6, wobei die thermische Verbindung von einem Wärmetauscher (2813) zwischen dem primären Kreislauf (2811) und dem Kühlmittel angeordnet ist.

8. Kraftwerkeinheit nach Anspruch 6, wobei der primäre Kreislauf (2811) des Wärmepumpensystems (281) angeordnet ist, einen radiatorartigen Wärmetauscher zu umfassen, der von dem Kühlmittelkreislauf, der innerhalb des Radiators (21) angeordnet ist, getrennt ist.

9. Kraftwerkeinheit nach Anspruch 6, umfassend einen Zwischenfluidkanal (27), der das Kühlsystem in mindestens zwei Kreisläufe konfiguriert, wenn der Motor (1) sich im Bereitschaftszustand befindet,
- einen Radiatorkreislauf (210), wobei ein Teil des Kühlmittels konfiguriert ist, zwischen dem Radiator (21) und einem Wärmetauscher (2813) des primären Kreislaufes (2811) des Wärmepumpensystems (281) zirkuliert zu werden, und
- einen Vorwärmkreislauf (280), wobei ein Teil des Kühlmittels konfiguriert ist, zwischen dem Motor (1) und einem Wärmetauscher (2815) in dem Vorwärmkreislauf (280) zirkuliert zu werden.

10. Kraftwerkeinheit nach Anspruch 9, wobei der Wärmetauscher in dem Vorwärmkreislauf derart angeordnet ist, dass der sekundäre Kreislauf des Wärmetauschers der Vorwärmkreislauf ist und der primäre Kreislauf des Wärmetauschers als ein sekundärer Kreislauf eines Wärmetauschers in dem sekundären Kreislauf des Wärmepumpensystems angeordnet ist.

11. Kraftwerk, umfassend mindestens eine Kraftwerkeinheit nach Anspruch 6, wobei eine Kraftwerkeinheit mindestens einen Motor (1) umfasst, aber auch mehrere Motoren (1) umfassen kann.

12. Kraftwerk nach Anspruch 6, umfassend zwei oder mehr Motoren (1) und wobei der Radiator (21) oder Radiatoren (21) eines Motors (1) mit Wärmepumpensystem (281) verwendet wird bzw. werden.

13. Kraftwerk nach Anspruch 6, umfassend ein Wärmepumpensystem (281), das einen oder mehrere Radiator/en (21) verwendet und Energie an Vorwärmkreisläufe (280) eines oder mehrerer Motors/Motoren (1) liefert.

14. Verfahren zum Vorwärmen einer Kraftwerkeinheit;
- eine Kühlmittelzirkulation wird innerhalb eines Kühlsystems (2), das einen Verbrennungsmotor (1), einen Radiator (21) zum Wärmetausch mit dem Motor, einen Auslassfluidkanal (24) zum Leiten des Kühlmittels von dem Motor (1) zu dem Radiator (21), einen Einlassfluidkanal (25) zum Rückführen des Kühlmittels von dem Radiator (21) zurück zu dem Motor (1) umfasst, angeordnet, und wobei eine Fluidpumpe (26) zum Zirkulieren des Kühlmittels betrieben wird,
- dem Kühlsystem (2) wird Wärme von einem Vorwärmsystem (28) zum Wärmen des Kühlmittels bereitgestellt, wenn der Motor (1) sich im Bereitschaftszustand befindet, das Vorwärmsystem (28) wird mit einem Wärmetauscher (2815) eines Wärmepumpensystems (281) bereitgestellt, wobei das Wärmepumpensystem (281) thermische Energie von Luft, die über/durch den Radiator (21) passiert, nutzt, wobei das Wärmepumpensystem (281) angeordnet ist, um thermische Energie von Luft mit niedrigerer Temperatur zu thermischer Energie des Kühlmittels mit höherer Temperatur zu wandeln,
das Wärmepumpensystem (281) umfasst auch eine Wärmepumpeneinheit (2810), einen primären Kreislauf mit Niedrigtemperatur (2811), der in thermischer Verbindungen mit dem Kühlmittel, das durch den Radiator (21) zu fließen ist, angeordnet ist, und einen sekundären Kreislauf mit hoher Temperatur (2812), wobei ein Wärmetransfermedium angeordnet ist, zwischen dem primären (2811) und dem sekundären (2812) Kreislauf komprimiert und expandiert zu werden.

15. Verfahren nach Anspruch 14, wobei das Vorwärmsystem (281) selektiv relativ zur Umgebungstemperatur (21) gesteuert wird.

16. Verfahren nach Anspruch 14, wobei die Wärmepumpeneinheit (2810) als außer Betrieb gewählt wird in Umgebungstemperaturen unter einem vorbestimmten Grenzwert oder während anderer nachteiliger Wetterbedingungen, wie etwa bei stark eisbildendem Wetter.

## Revendications

1. Système de préchauffage (2) d'une centrale électrique comprenant un moteur à combustion interne (1) et un système de refroidissement (2) pour l'élimination de l'excès de chaleur provenant du moteur (1) en état de marche, dans lequel le système de refroidissement (2) comprend une circulation de fluide de refroidissement assurée dans le moteur (1), un radiateur (21) pour l'échange de chaleur du moteur (1), un canal de fluide de sortie (24) pour conduire le fluide de refroidissement du moteur (1) au radiateur (21), un canal de fluide d'entrée (25) pour renvoyer le fluide de refroidissement du radiateur (21) au moteur (1), et une pompe de fluide (26) pour faire circuler le fluide de refroidissement,
le système de refroidissement (2) est pourvu dudit système de préchauffage (28) pour chauffer le fluide de refroidissement, quand le moteur (1) est en état de veille,
le système de préchauffage (28) est pourvu d'un système de pompe à chaleur (281) agencé pour utiliser l'énergie thermique de l'air à faire passer par le radiateur (21), le système de pompe à chaleur (281) est agencé pour convertir l'énergie thermique d'air à plus basse température en énergie thermique du fluide de refroidissement à plus haute température,
- le système de pompe à chaleur (281) comprend également une unité de pompe à chaleur (2810), un circuit primaire à basse température (2811) agencé en connexion thermique avec ledit fluide de refroidissement à écouler à travers le radiateur (21) et un circuit secondaire à haute température (2812), dans lequel un milieu de transfert de chaleur est agencé pour être compressé et détendu entre le circuit primaire (2811) et le circuit secondaire (2812),
- le système de préchauffage (28) est pourvu d'un échangeur de chaleur (2815) du système de pompe à chaleur (281) configuré pour transférer de la chaleur au moteur (1).

2. Système de préchauffage (28) selon la revendication 1, dans lequel la connexion thermique est assurée par un échangeur de chaleur (2813) entre ledit circuit primaire (2811) du système de pompe à chaleur (281) et ledit fluide de refroidissement.

3. Système de préchauffage (28) selon la revendication 1, dans lequel le circuit primaire (2811) du système de pompe à chaleur (281) est agencé pour comprendre un échangeur de chaleur de type radiateur séparé du circuit de fluide de refroidissement et qui est situé dans le radiateur (21).

4. Système de préchauffage (281) selon la revendication 1, comprenant un canal de fluide intermédiaire (27) configurant le système de refroidissement (2) en au moins deux circuits, quand le moteur (1) est en état de veille,
- un circuit de radiateur (210) dans lequel une partie du fluide de refroidissement est configurée pour être circulée entre le radiateur (21) et un échangeur de chaleur (2813) du circuit primaire (2811) du système de pompe à chaleur (281), et
- un circuit de préchauffage (280) dans lequel une partie du fluide de refroidissement est configurée pour être circulée entre le moteur (1) et un échangeur de chaleur (2815) dans le circuit de préchauffage (280).

5. Système de préchauffage (28) selon la revendication 4, dans lequel l'échangeur de chaleur (2815) dans le circuit de préchauffage (280) est agencé de telle sorte que le circuit secondaire des échangeurs de chaleur (2815) est le circuit de préchauffage (280) et le circuit primaire des échangeurs de chaleur (2815) est un circuit de transfert (285) agencé comme circuit secondaire d'un échangeur de chaleur (2814) dans le circuit secondaire (2812) du système de pompe à chaleur (281).

6. Unité de centrale électrique comprenant un moteur à combustion interne (1) et un système de refroidissement (2) pour l'élimination de l'excès de chaleur du moteur (1) en état de marche, dans laquelle le système de refroidissement (2) comprend une circulation de fluide de refroidissement assurée dans le moteur (1), un radiateur (21) pour l'échange de chaleur du moteur (21), un canal de fluide de sortie (24) pour conduire le fluide de refroidissement du moteur (1) au radiateur (21), un canal de fluide d'entrée (25) pour renvoyer le fluide de refroidissement du radiateur (21) au moteur (1), et une pompe de fluide (26) pour faire circuler le fluide de refroidissement,
le système de refroidissement (2) est pourvu d'un système de préchauffage (28) pour chauffer le fluide de refroidissement, quand le moteur (1) est en état de veille,
le système de préchauffage (28) est pourvu d'un système de pompe à chaleur (281) agencé pour utiliser l'énergie thermique de l'air à faire passer par le radiateur (21), le système de pompe à chaleur (281) est agencé pour convertir l'énergie thermique d'air à plus basse température en énergie thermique du fluide de refroidissement à plus haute température,
le système de pompe à chaleur (281) comprend également une unité de pompe à chaleur (2810), un circuit primaire à basse température (2811) agencé en connexion thermique avec ledit fluide de refroidissement à écouler à travers le radiateur (21), et un circuit secondaire à haute température (2812), dans lequel un milieu de transfert de chaleur est agencé pour être compressé et détendu entre le circuit primaire (2811) et le circuit secondaire (2812),
le système de préchauffage (281) est pourvu d'un échangeur de chaleur (2815) du système de pompe à chaleur (281) configuré pour transférer de la chaleur au moteur (1).

7. Unité de centrale électrique selon la revendication 6, dans laquelle la connexion thermique est assurée par un échangeur de chaleur (2813) entre ledit circuit primaire (2811) et ledit fluide de refroidissement.

8. Unité de centrale électrique selon la revendication 6, dans laquelle le circuit primaire (2811) du système de pompe à chaleur (281) est agencé pour comprendre un échangeur de chaleur de type radiateur séparé du circuit de fluide de refroidissement, qui est situé dans le radiateur (21).

9. Unité de centrale électrique selon la revendication 6, comprenant un canal de fluide intermédiaire (27) configurant le système de refroidissement en au moins deux circuits, quand le moteur (1) est en état de veille,
- un circuit de radiateur (210) dans lequel une partie du fluide de refroidissement est configurée pour être circulée entre le radiateur (21) et un échangeur de chaleur (2813) du circuit primaire (2811) du système de pompe à chaleur (281), et
- un circuit de préchauffage (280) dans lequel une partie du fluide de refroidissement est configurée pour être circulée entre le moteur (1) et un échangeur de chaleur (2815) dans le circuit de préchauffage (280).

10. Unité de centrale électrique selon la revendication 9, dans laquelle l'échangeur de chaleur dans le circuit de préchauffage est agencé de telle sorte que le circuit secondaire des échangeurs de chaleur est le circuit de préchauffage et le circuit primaire des échangeurs de chaleur est un circuit de transfert agencé comme circuit secondaire d'un échangeur de chaleur dans le circuit secondaire du système de pompe à chaleur.

11. Centrale électrique comprenant au moins une unité de centrale électrique selon la revendication 6, dans laquelle une unité de centrale électrique comprend au moins un moteur (1) mais peut également comprendre plusieurs moteurs (1).

12. Unité de centrale électrique selon la revendication 6, comprenant deux ou plusieurs moteurs (1), et dans laquelle le radiateur (21) ou les radiateurs (21) d'un moteur (1) sont utilisés avec le système de pompe à chaleur (281).

13. Unité de centrale électrique selon la revendication 6, comprenant un système de pompe à chaleur (281) qui utilise un ou plusieurs radiateurs (21) et alimente en électricité les circuits de préchauffage (280) d'un ou plusieurs moteurs (1).

14. Procédé de préchauffage d'une unité de centrale électrique, dans lequel
- une circulation de fluide de refroidissement est assurée dans un système de refroidissement (2) comprenant un moteur à combustion interne (1), un radiateur (21) pour l'échange de chaleur du moteur, un canal de fluide de sortie (24) pour conduire le fluide de refroidissement du moteur (1) au radiateur (21), un canal de fluide d'entrée (25) pour renvoyer le fluide de refroidissement du radiateur (21) au moteur (1), et dans lequel une pompe de fluide (26) est utilisée pour faire circuler le fluide de refroidissement,
- le système de refroidissement (2) reçoit de la chaleur d'un système de préchauffage (28) pour chauffer le fluide de refroidissement, quand le moteur (1) est en état de veille,
le système de préchauffage (28) est pourvu d'un échangeur de chaleur (2815) d'un système de pompe à chaleur (281), ledit système de pompe à chaleur (281) utilisant l'énergie thermique de l'air qui passer par le radiateur (21), le système de pompe à chaleur (281) est agencé pour convertir l'énergie thermique d'air à plus basse température en énergie thermique de fluide de refroidissement à plus haute température,
le système de pompe à chaleur (281) comprend également une unité de pompe à chaleur (2810), un circuit primaire à basse température (2811) agencé en connexion thermique avec ledit fluide de refroidissement à écouler à travers le radiateur (21), et un circuit secondaire à haute température (2812), dans lequel un milieu de transfert de chaleur est agencé pour être compressé et détendu entre le circuit primaire (2811) et le circuit secondaire (2812).

15. Procédé selon la revendication 14, dans lequel le système de préchauffage (281) est contrôlé sélectivement par rapport à la température ambiante du radiateur (21).

16. Procédé selon la revendication 14, dans lequel l'unité de pompe à chaleur (2810) est sélectionnée pour être mise hors service à des températures ambiantes inférieures à une limite prédéterminée ou durant d'autres conditions météorologiques adverses telles qu'un temps à forte formation de givre.
